(19) Europäisches Patentamt
European Patent Office
Office européen des brevets

(11) Publication number: 0 135 263
B1

(12) EUROPEAN PATENT SPECIFICATION

(45) Date of publication of patent specification: 31.08.88

(51) Int. Cl.⁴: C 08 L 23/02, C 08 L 51/06, C 08 L 59/00

(21) Application number: 84304321.7

(22) Date of filing: 26.06.84

# (54) Melt blends of oxymethylene polymers and ionic copolymers.

(30) Priority: 27.06.83 US 508230

(43) Date of publication of application: 27.03.85 Bulletin 85/13

(45) Publication of the grant of the patent: 31.08.88 Bulletin 88/35

(84) Designated Contracting States: BE DE FR GB IT NL

(56) References cited:
FR-A-1 367 558
FR-A-1 493 043
US-A-4 310 638
US-A-4 348 501
CHEMICAL ABSTRACTS, vol. 77, no. 2, July 10, 1972, page 33, no. 6222k, Columbus, Ohio, US; M.V. TSEBRENKO et al.: "Rheological properties of molten polyformaldehyde mixtures with ethylene-vinyl acetate copolymer"

(73) Proprietor: CELANESE CORPORATION
1211 Avenue of the Americas
New York New York 10036 (US)

(72) Inventor: McKie, Derrick B.
37 South Oxford Street
Brooklyn New York (US)
Inventor: Zimmerman, Daniel
17 Independence Drive
East Brunswick New Jersey (US)

(74) Representative: De Minvielle-Devaux, Ian Benedict Peter et al
CARPMAELS & RANSFORD 43, Bloomsbury Square
London WC1A 2RA (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is directed to resins suitable for moulding compositions in the form of melt blends of an ionic copolymer and an oxymethylene polymer.

Ionic copolymers such as those marketed by E. I. du Pont de Nemours under the Trade Name Surlyn have been employed in various moulding compositions to provided moulded articles which exhibit certain desirable properties such as low temperature impact toughness, abrasion resistance and solvent resistance. See, for example, U.S. Patents Nos: 3,454,280, 3,819,768, 4,078,014; 4,274,637; 4,294,938 and 4,314,929. It would, however, be desirable to improve the flexural modulus and strength as well as the tensile modulus of such moulded articles to enable such articles to be employed in a wider range of applications.

It has surprisingly been found that it is possible to effect such improvement without losing the advantageous properties of certain ionic copolymers if a melt blend is formed of these ionic copolymers and a certain other polymer.

In accordance with the present invention there is provided a melt blend comprising 2 to 40 percent by weight of an oxymethylene polymer and 98 to 60 percent by weight of an ionic copolymer of alpha olefins having from 2 to 8 carbon atoms and at least one alpha, beta-ethylenically unsaturated carboxylic acid having from 3 to 8 carbon atoms, the copolymer having from 10 to 90 percent of the carboxylic acid groups ionised by neutralisation with metal ions.

In accordance with the present invention there are also provided moulded articles formed from the above melt blend.

The melt blend of the invention is one which comprises an ionic copolymer and which may nevertheless be employed in a moulded article which exhibits improved flexural and tensile modulus.

Moreover it may be employed in a moulded article which exhibits improved tensile strength.

Figure 1 is a graphical depiction of the viscosity-shear rate curves for both an ionic copolymer and an oxymethylene copolymer.

Figure 2 is a graphical depiction of the viscosity-shear rate curves for both an ionic copolymer alone and a blend of the present invention comprising 95 percent by weight of an ionic copolymer and 5 percent by weight an oxymethylene copolymer.

Figure 3 is a graphical depiction of the viscosity-shear rate curves for both an ionic copolymer alone and a blend of the present invention comprising 90 percent by weight of an ionic copolymer and 10 percent by weight of an oxymethylene copolymer.

Figure 4 is a graphical depiction of the viscosity-shear rate curves for both an ionic copolymer alone and three blends of the present invention comprising respectively 97, 90 and 80 percent by weight of an ionic copolymer and the balance an oxymethylene copolymer.

Figure 5 is a graphical depiction of the viscosity-shear rate curves for both an ionic copolymer alone and two blends of the present invention comprising respectively 70 and 60 percent by weight of an ionic copolymer and the balance an oxymethylene copolymer.

It has been surprisingly and unexpectedly discovered that a melt blend comprising an ionic copolymer (as defined above) can be employed to produce moulded articles which exhibit enhanced mechanical properties if the blend additionally includes an oxymethylene copolymer.

A. The oxymethylene polymer component

Oxymethylene polymers having recurring —$CH_2O$— units are well known. They may be prepared by polmerising a source of oxymethylene units, such as anhydrous formaldehyde or trioxane, a cyclic trimer of formaldehyde. High molecular weight solid polyoxymethylenes have been prepared by polymerising trioxane in the presence of cationic polymerisation catalysts, including such compounds as boron trifluoride, antimony trifluoride, antimony fluoborate, bismuth trifluoride, bismuth oxyfluoride, nickelous fluoride, aluminium trifluoride, titanium tetrafluoride, manganous fluoride, manganic fluoride, mercuric fluoride, silver fluoride, zinc fluoride, ammonium bifluoride, phosphorous pentafluoride, hydrogen fluoride, thinoyl chloride, fluorosulfonic acid, phosphorous trichloride, titanium tetrachloride, ferric chloride zirconium tetrachloride, aluminium trichloride, stannic chloride, stannous chloride and the alkane sulfonic acids, e.g., ethane sulfonic acid and methane sulfonic acid.

The preferred catalysts are boron fluoride and the boron fluoride complexes with water (such as boron fluoride monohydrate, boron fluoride dihydrate and boron fluoride trihydrate) and boron fluoride co-ordinate complexes with organic compounds, especially those in which oxygen or sulfur is the donor atom. The co-ordinate complex of boron fluoride may, for example, be a complex with an alcohol, a phenol, an acid, an ether, an acid anhydride, an ester, a ketone, an aldehyde, a dialkyl sulfide or a mercaptan. Boron fluoride etherate, the co-ordinate complex of boron fluoride with diethyl ether, is the preferred co-ordinate complex. The boron fluoride complexes with phenol and with acetic acid are also very effective. Other specific boron fluoride complexes, for example, are the complexes with ethanol, methanol, propanol, butanol, methyl acetate, ethyl acetate, phenyl acetate, benzoic acid, acetic anhydride, acetone, methyl ethyl ketone, dimethyl ether, methyl phenyl ether, acetaldehyde, chloral, dimethyl sulfate and ethyl mercaptan.

Suitable catalysts are disclosed in U.S. Patents Nos: 2,989,505; 2,989,506; 2,989,507; 2,989,508 and

2,989,509, all of Donald E. Hudgin and Frank M. Berardinelli; 2,989,510 of George J. Bruni, 2,989,511 of Arthur Schnizer and in an article by Kern et al in *Angewandte Chemie 73,* pp 176—186 (March 21, 1961).

Oxymethylene polymers of improved thermal stability may be prepared by introducing into the polymer chains, or attaching to the ends of the polymer chains, structures which are resistant to thermal detachment. The polymers may include interspersed oxyalkylene units with adjacent carbon atoms and preferably oxyethylene units as disclosed in U.S. Patent No. 3,027,352 of Walling et al. Copolymers of this type may comprise (—$CH_2O$—) units (usually at least 85 mole percent) interspersed with (—OR—) units wherein R is a divalent radical containing at least two carbon atoms directly linked to each other and positioned in the chain between the two valences, with any substituent in the R radical being inert. Suitable substituents include but are not limited to hydrogen, lower alkyl and halogen-substituted lower alkyl and mixtures thereof.

Specific interspersed monomeric units which may be incorporated are those derived from lactones, carbonate, cyclic acid anhydrides or ethylenically-unsaturated compounds, such as styrene, divinyl ether, vinyl acetate, vinyl methyl ketone or acrolein, as disclosed in the aforementioned article by Kern et al. The polymer may be end-capped as, for example, by acylation or etherification after polymerisation or during polymerisation by the use of selected chain transfer agents.

Oxymethylene copolymers and terpolymers with such oxacylic or oxo-functional compounds, as cyclic ethers having at least two cyclic ether rings, dialdehydes and diketones, have also been prepared, as described in e.g., French Patent No. 1,345,218.

As used in the specification and claims, the term "oxymethylene polymers" denotes homopolymers and copolymers (including terpolymers, etc.) having at least 60 percent recurring oxymethylene units, and further includes substituted oxymethylene polymers, wherein the substituents are inert, i.e. they do not participate in undesirable side reactions.

A preferred group of polymers intended to be utilised in accordance with this invention is oxymethylene-cyclic ether copolymers having a structure comprising recurring units having the formula

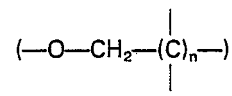

wherein n is an integer from zero to 5 and the recurring units wherein n is zero constitute from 60 to 99.6 (e.g., 85 to 99.6) percent by weight of the copolymer.

Suitable oxymethylene copolymers have repeating units which consist essentially of (a) —$OCH_2$— groups interspersed with (b) groups represented by the general formula:

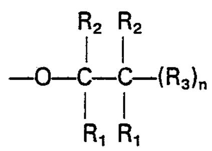

(A)

wherein each $R_1$ and $R_2$ is selected from hydrogen, lower alkyl and halogen-substituted lower alkyl radicals, each $R_3$ is selected from methylene, oxymethylene, lower alkyl and haloalkyl-substituted methylene, and lower alkyl and haloalkyl-substituted oxymethylene radicals and n is 0, 1, 2 or 3, each lower alkyl radical having 1 or 2 carbon atoms, and said groups of the formula A being incorporated during the step of copolymerisation to produce the copolymer by the opening of a ring of a cyclic ether having adjacent carbon atoms by the breaking of an oxygen-to-carbon linkage.

A preferred class of copolymers are those having a structure comprising recurring units having the formula (—O—$CH_2$—$(CH_2)_n$—) wherein nis 0, 1, 2 or 3 and wherein n is zero in from 60 to 99.6 percent of the recurring units. These copolymers are prepared by copolymerising trioxane with a cyclic ether having the structure

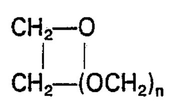

where n is 0, 1 or 2.

Among the specific cyclic ethers which may be used are ethylene oxide, 1,3-dioxolane, 1,3,5-trioxepane, 1,3-dioxane, trimethylene oxide, pentamethylene oxide, 1,2-propylene oxide, 1,2-butylene oxide, neopentyl formal, pentaerythritol diformal, paraldehyde, tetrahydrofuran and butadiene monoxide.

The preferred catalysts used in the preparation of the desired copolymers are the boron fluoride co-ordinate complexes with organic compounds in which oxygen or sulfur is the donor atom. The co-ordination complexes of boron fluoride may, for example, be a complex with a phenol, an ether, an ester or a dialkyl sulfide. Boron fluoride dibutyl etherate, the co-ordination complex of boron fluoride with dibutyl ether, is the preferred co-ordination complex. The boron fluoride complex with diethyl ether is also

very effective. Other boron fluoride complexes which may be used are the complexes with methyl acetate, with ethyl acetate, with phenyl acetate, with dimethyl ether, with methylphenyl ether and with dimethyl sulfide.

The co-ordination complex of boron fluoride should be present in the polymerisation zone in amounts such that its boron fluoride content is from 0.0001 to 1.0 percent by weight based on the weight of the monomers in the polymerisation zone. Preferably, amounts from 0.003 to 0.03 percent by weight should be used in a continuous process.

The preferred catalyst used in preparing the oxymethylene copolymer is the aforementioned boron trifluoride as discussed in U.S. Patent No: 3,027,352 issued to Walling et al. Reference may be made to this Patent for further information concerning the polymerisation conditions, amount of catalyst employed, etc.

The monomers in the reaction zone are preferably anhydrous or substantially anhydrous. Small amounts of moisture, such as may be present in commercial grade reactants or which may be introduced by contact with atmospheric air, will not prevent polymerisation but should be substantially removed for optimum yields.

In a specific embodiment of this invention the trioxane, cyclic ether and catalyst are dissolved in a common anhydrous solvent, such as cyclohexane, and are permitted to react in a sealed reaction zone. The temperature in the reaction zone may vary from 0°C to 100°C. The period of reaction may vary from 5 minutes to 72 hours. Pressures from sub-atmospheric to 100 atmospheres, or even greater, may be used, although atmospheric pressure is preferred.

It has been found that the relatively minor amounts of the cyclic ether other than trioxane used in the copolymerisation reaction generally disappear completely from the reaction mixture. The required ratio of trioxane to cyclic ether in the reaction mixture may therefore be roughly predetermined for a desired mole ratio in the polymer by assuming that all of the cyclic ether is used up and by assuming a particular conversion level from previous experience under substantially comparable conditions.

The chemical constitution of the cyclic ether must also be considered. Thus, 1,3-dioxolane contains both an oxymethylene group and an oxyethylene group. The incorporation thereof into the copolymer molecule introduces oxyethylene groups into the polymer molecule.

In general, the cyclic ether is present in the reaction mixture in amounts from 0.2 to 30 mole percent, based on the total moles of monomer. The optimum proportion will depend on the particular copolymer desired, the expected degree of conversion and the chemical constitution of the cyclic ether used.

The copolymer produced from the preferred cyclic ethers in accordance with this invention generally have a structure substantially comprising oxymethylene and oxyethylene groups in a ratio from 1000:1 to 6:1, preferably 250:1 to 1.5:1.

Upon completion of the polymerisation reaction, it is desirable to neutralise the activity of the polymerisation catalyst since prolonged contact with the catalyst degrades the polymer. The polymerisation product may be treated with an aliphatic amine, such as tri-n-butyl-amine, in stoichiometric excess over the amount of free catalyst in the reaction product, and preferably in an organic wash liquid which is a solvent for unreacted trioxane. Or, if desired, the reaction product may be washed with water which neutralises catalyst activity. A detailed description of the methods of neutralising catalyst activity may be found in U.S. Patent No: 2,989,509 of Hudgin et al. A preferred oxymethylene copolymer is commercially available from the Celanese Corporation under the designation Celcon acetal copolymer. Celcon is a Trade Mark.

The preferred oxymethylene copolymers for use in the present invention are thermoplastic materials having a melting point of at least 150°C., and normally are millable or processable at a temperature of about 200°C. They have a number average molecular weight of at least 10,000. It is preferred that the oxymethylene polymers have an inherent viscosity of at least 1.0 (measured at 60°C in a 0.1 weight percent solution in p-chlorophenol containing 2 weight percent of alpha-pinene).

The oxymethylene copolymer component preferably is an oxymethylene copolymer that has been preliminarily stabilised to a substantial degree. Such stabilising technique may take the form of stabilisation by degradation of the molecular ends of the polymer chain to a point where a relatively stable carbon-to-carbon linkage exists at each end. For example, such degradation may be effected by hydrolysis as disclosed in our U.S. Patent No: 3,219,623.

If desired, the oxymethylene polymer may be end-capped by techniques known to those skilled in the art. A preferred end capping technique is accomplished by acetylation with acetic anhydride in the presence of sodium acetate catalyst.

As indicated hereinabove, the oxymethylene polymer of the present invention preferably comprises oxymethylene ($—CH_2O—$) units (usually at least 85 mole percent) interspersed with up to 15 mole percent of (—OR—) units, wherein R is a divalent radical containing at least two carbon atoms directly linked to each other and positioned in the chain between the two valences, with any substituent in the R radical being inert. Suitable copolymers of this class may have a number average molecular weight from 1000 to 80,000, or even higher, with inherent viscosities ranging from 0.2 to 1.5, or even higher. Depending upon the type and extent of property modification sought, the low molecular weight species (e.g., 1000 to 10,000), the high molecular weight species (e.g., 30,000 to 80,000) or any mixture thereof may be employed. The preferred copolymers are disclosed in U.S. Patent No: 3,027,352 of Walling et al.

Mouldable oxymethylene polymers having branched chains (said chains comprising a plurality of

branches of successively recurring oxymethylene units) may also be employed to advantage in the practice of the present invention. Such polymers may be prepared by copolymerising trioxane with a small amount of a chain branching agent, the small amount being sufficient to link some primary oxymethylene chains to provide a branched structure but insufficient to make the polymer intractable. Primary chains are linear chains comprising successively recurring oxymethylene units and are the chains which would be produced if the chain branching agent were omitted from the system. The amount of chain branching agent used is generally not more than that required to provide one link to another chain for each primary chain in the system.

Suitable chain branching agents, depending on the particular circumstances involved, include those having at least two functional groups including (1) cyclic ethers having at least two cyclic ether rings, such as 2,2-(trimethylene)bis-1,3-dioxolane, and particularly those compounds having (a) at least two epoxy rings, such as polyepoxides, including diepoxides, triepoxides, etc., (b) at least two formal rings, such as pentaerythritol diformal, and (c) at least one epoxy ring and at least one formal ring, such as monocrotylidene trimethyloethane monoepoxide; and (2) compounds having at least two oxo groups, such as dialdehydes and diketones, for example glutaraldehyde, terephthaladehyde and acrolein dimer.

Suitable polyepoxides include those which may be prepared by the epoxidation of compounds having two or more olefinic linkages. Diepoxides of diolefins are usually used and the epoxidised olefinic bonds may be of alphatic or cycloaliphatic structures. Particular diepoxides which may be used include butadiene dioxide, vinyl cyclohexene dioxide (1 - epoxyethyl - 3,4 - epoxycyclohexane), limonene dioxide, resorcinol diglycidylether, butane diol diglycidyl ether, bis-epoxydicyclopentyl ether of ethylene glycol, dicyclopentadiene dioxide and dicrotilidene pentaerythritol diepoxide. Suitable triepoxides include triglycidyl trimethylpropane prepared by reacting the triallyl ether of trimethylolpropane in a solvent with peracetic acid at a temperature of 0 to 75°C. Suitable polyepoxides include a polyepoxide glyceryl ester containing an average of 5.5 epoxy groups per molecule.

The chain branching agents are usually copolymerised with the trioxane in proportions from 0.01 to 7 weight percent, preferably less than 1 percent by weight, and most preferably from 0.05 to 0.80 percent by weight of the chain branching agent based on the weight of trioxane.

Especially desirable polymers are terpolymers of trioxane, a chain branching agent as described above, and a bifunctional compound. Preferred bifunctional compounds include (1) those having at least two functional groups, (2) those having at least one unsaturated bond, (3) those having at least one openable ring structure and (4) combinations of two or more of (1), (2) and (3). Specific bifunctional materials include those disclosed in U.S. Patent No: 3,027,352 and the Kern et al article mentioned above. In accordance with a preferred embodiment, the bifunctional compounds provide —O—R— units interspersed among the oxymethylene groups wherein R is a divalent radical containing at least two carbon atoms directly linked to each other and positioned in the chain between the two valences, with any substituents, e.g., hydrocarbons, halohydrocarbons, being inert, e.g., with respect to formaldehyde under the conditions of polymerisation.

Preferred terpolymers have chains containing (1) oxymethylene groups interspersed with (2) oxyalkylene groups with adjacent carbon atoms derived from the bifunctional compounds (preferably cyclic ethers having adjacent carbon atoms) and (3) oxyalkylene groups having carbon atoms linked to other chains, the last-named groups being derived from the chain branching agents.

Particularly preferred terpolymers are those wherein the oxyalkylene groups with adjacent carbon atoms are cyclic ethers containing oxyethylene groups, such as ethylene oxide and 1,3-dioxolane.

Other specific cyclic ethers having adjacent carbon atoms which may be used are 1,3,5-trioxepane, 1,3-dioxane trimethylene oxide, pentamethylene oxide, 1,2-propylene oxide, 1,2-butylene oxide, neopentyl formal, tetrahydrofurane and butadiene monoxide. Because of the fact that the inclusion of the chain branching agent produces polymers of lower melt index, terpolymers containing relatively high proportions of such cyclic ethers with adjacent carbon atoms e.g., about 10 weight percent, are substantially improved over comparable copolymers containing no chain branching agent.

In the preferred terpolymers there is generally from 75 to 99.5 percent by weight of recurring oxymethylene units, from 0.5 to 25 percent by weight of recurring units derived from the bifunctional compound (such as a cyclic ether with adjacent carbon atoms) and from 0.01 to 7 weight percent of units derived from the chain branching agent. The most preferred terpolymers have from 96.1 to 97.9 percent by weight of oxymethylene units and less than 1 percent by weight, preferably from 0.05 to 0.08 percent by weight, of units from the chain branching agent.

The oxymethylene polymer preferably incorporates the standard additives present in oxymethylene polymer moulding resins. For instance, a minor concentration of one or more antioxidants, chain scission inhibitors, acid scavengers, lubricants, nucleating agents, pigments, fibres, etc. may also be present. As already mentioned, a preferred oxymethylene copolymer is commercially available from the Celanese Engineering Resins Company under the designation Celcon acetal copolymer.

B. The ionic copolymer component

The second component of the claimed blend is an ionic copolymer containing polymerised units of an alpha olefin having from 2 to 8 carbon atoms and at least one alpha,beta-ethylenically unaturated carboxylic acid having from 3 to 8 carbon atoms. At least 10 percent and not more than 90 percent of the

carboxylic acid groups are ionised by neutralisation with metal ions selected from the class consisting of sodium, potassium, zinc, cadmium and lead ions. A preferred range of neutralisation is from 50 to 80 percent of the carboxylic acid groups. A preferred metal ion is the zinc ion.

The alpha olefin content of the copolymer generally exceeds 50 mole percent and preferably ranges from 80 to 99 and more preferably from 90 to 99 mole percent. The unsaturated carboxylic acid content generally ranges from 0.2 to 25 mole percent based on the copolymer, preferably from 1 to 10 mole percent.

Suitable ionic copolymers are copolymers comprising polymerised units of ethylene and at least one alpha,beta-ethylenically unsaturated carboxylic acid having from 3 to 8 carbon atoms (and, optionally, a monoethylenically unsaturated monomer). The concentration of ethylene polymerised units generally ranges from 80 to 99 mole percent. Examples of alpha,beta-ethylenically unsaturated carboxylic acids are acrylic acid, methacrylic acid, ethacrylic acid, itaconic acid, maleic acid, fumaric acid and monoesters of such dicarboxylic acids including methyl hydrogen maleate, methyl hydrogen fumarate, ethyl hydrogen fumarate and maleic anhydride. Although maleic anhydride is not a carboxylic acid in that it has no hydrogen attached to the carboxyl group it is considered to be an acid for the purposes of the present invention because its chemical reactivity is that of an acid. Similarly, other alpha, beta-monoethylenically unsaturated anhydrides of carboxylic acids can be employed. Also diacids are suitable. Preferred acids are methacrylic and acrylic acids.

Such ionic copolymers are well known and available commercially from E.I. du Pont de Nemours under the tradename Surlyn. Surlyn is a Trade Mark. The polymers can be prepared as described in U.S. Patent 3,264,272 and 3,437,718. It is preferred that the product of the degree of neutralisation and the weight fraction of unsaturated acid, e.g., methacrylic acid, in the base copolymer be at least 4 percent by weight.

C. The blends of the present invention

The blends of the present invention comprise from 2 to 40 percent by weight of the oxymethylene component and from 98 to 60 percent by weight of the ionic copolymer component. Preferably, the blend comprises from 5 to 10 percent by weight of the oxymethylene component and from 95 to 90 percent by weight of the ionic copolymer component.

Blends of the present invention may include 1 to 60, preferably 50 to 60, percent by volume, based upon the total weight of the article, of a reinforcing agent. Representative fibres which may serve as reinforcing agent include but are not limited to glass fibres, graphitic carbon fibres, amorphous carbon fibres, synthetic polymeric fibres, aluminium fibres, titanium fibres, steel fibres, tungsten fibres and ceramic fibres.

Filler materials may also be employed in amounts ranging from 1 to 50 percent by weight. Exemplary filler materials include calcium silicate, silica, clays, talc, mica, polytetrafluoroethylene, graphite, alumina trihydrate, sodium aluminium carbonate and barium ferrite.

The blend of the present invention may be formed by any suitable method such as tumble-blending the polymers together with any fillers or reinforcing agents prior to melt blending by extrusion subsequent to which the blend can be pelletised.

As demonstrated in the Examples, the presence of the oxymethylene component in the melt blend enhances the flexural modulus and strength as well as the tensile modulus of moulded articles comprised of the blend in comparison to those properties exhibited by moulded articles comprised of the ionic copolymer alone. Surprisingly, such increases in the above mechanical properties occur without significant decreases in the other mechanical properties exhibited by moulded articles comprised of the blend. The rheological characteristics of the blend as evidenced by the viscosity-shear rate curve of blends of the present invention are also surprisingly substantially unchanged in comparison with the rheological characteristics of the ionic copolymer alone.

Example 1

Melt blends comprised of either an oxymethylene copolymer marketed by Celanese Corporation under the trade designation Celcon M270-04 or an oxymethylene homopolymer marketed by E.I. du Pont de Nemours under the trade designation Delrin (Delrin is a Trade Mark) and an ionic copolymer of ethylene and methacrylic acid having zinc counter ions marketed by E.I. du pont de Nemours under the trade designation Surlyn 9020 were formed with the percentage of the oxymethylene polymer present in the blend varying from 0 to 30 percent by weight.

The oxymethylene polymer and the ionic copolymer were tumble-blended together and fed to a twin screw compounding extruder with a uniform temperature profile of 180°C. A high shear screw design was used and the admixture melt blended at 260 rpm and the blend pelletised.

Tensile and flexural bars were formed by injection moulding the blend, with the flexural strength (ASTM D790), flexural modulus (ASTM D790) and tensile modulus (ASTM D638) of each of the moulded specimens being determined and set forth in Table I below.

TABLE I
Example 1 Results

| Sample | Oxymethylene polymer/ ionic copolymer (weight ratio) | Flexural strength psi (kPa) | Flexural modulus psi×$10^{-3}$ (kPa×$10^{-3}$) | Tensile modulus psi×$10^{-2}$ (kPa×$10^{-2}$) |
|---|---|---|---|---|
| 1 | 0/100 | 594 (4095) | 14 (96) | 161 (1110) |
| 2 | 1/99 | 589 (4061) | 13 (89) | 156 (1075) |
| 3 | 3/97 | 710 (4895) | 14 (96) | 172 (1178) |
| 4 | 4/96 | 731 (5040) | 16 (110) | 165 (1137) |
| 5 | 5/95 | 842 (5805) | 18 (124) | 192 (1323) |
| 6 | 10/90 | 1030 (7101) | 27 (186) | 282 (1944) |
| 7 | 10/90 | 983 (6777) | 23 (158) | 310 (2137) |
| 8 | 20/80 | 1817 (12528) | 47 (324) | 503 (3468) |
| 9 | 30/70 | 2791 (19243) | 73 (503) | 824 (5681) |

Note: Samples 1—6, 8 and 9 comprise an oxymethylene copolymer. Sample 7 comprises an oxymethylene homopolymer

Example 2

Melt blends of the oxymethylene copolymer and the ionic copolymer of Example 1 were formed in the same manner as in Example 1. Viscosity-shear rate curves for compositions comprising 100 percent of the oxymethylene copolymer, 100 percent of the ionic copolymer and 5 and 10 percent by weight of the oxymethylene copolymer were obtained and the results are set forth in Figure 1 (100 percent of each), Figure 2 (weight ratio of 95:5) and Figure 3 (weight ratio of 90:10). Shear sensitive melt viscosity of these blends was obtained by use of a 34:1 (L/D) capillary rheometer at 190°C over a shear rate range of 200 to 9000 $sec^{-1}$. A review of the Figures indicates that the presence of the oxymethylene copolymer advantageously has little effect upon the rheological characteristics of the ionic copolymer.

Example 3

Melt blends of the oxymethylene copolymer and the ionic copolymer of Example 1 were formed in the same manner as in Example 1. Viscosity-shear rate curves for compositions comprising 100 percent of the ionic copolymer, and 3, 10, 20, 30 and 40 percent by weight of the oxymethylene polymer were obtained as in Example 2 and the results are set forth in Figure 4 (weight ratios of 100:0, 97:3, 90:10 and 80:20) and Figure 5 (weight ratios of 70:30 and 60:40). A review of Figures 4 and 5 indicates that the presence of the oxymethylene copolymer has little effect upon the rheological characteristics of the ionic copolymer and provides the advantage of a lower shear sensitive viscosity which is indicative of improved melt processability.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in the art without departing from the scope of the invention.

**Claims**

1. A melt blend comprising 2 to 40 percent by weight of an oxymethylene polymer and 98 to 60 percent by weight of an ionic copolymer of alpha-olefins having from 2 to 8 carbon atoms and at least one alpha, beta-ethylenically unsaturated carboxylic acid having from 3 to 8 carbon atoms, the copolymer having from 10 to 90 percent of the carboxylic acid groups ionised by neutralisation with metal ions.

2. The melt blend of Claim 1 wherein the said alpha-olefin is ethylene.

3. The melt blend of Claim 1 or 2 wherein the metal ions are selected from sodium potassium, zinc, cadmium and lead.

4. The melt blend of any of Claims 1—3 wherein the ionic copolymer comprises a copolymer of ethylene and methacrylic acid in which the carboxyl groups are partially neutralised with zinc.

5. The melt blend of any of Claims 1—4 wherein the ionic polymer comprises at least 50 mole percent of the alpha-olefin.

6. The melt blend of Claim 5 wherein the ionic copolymer comprises from 80 to 99 mole percent of the alpha-olefin.

7. The melt blend of any of Claims 1—6 wherein the ionic copolymer comprises from 0.2 to 25 mole percent of the unsaturated carboxylic acid.

8. The melt blend of any of Claims 1—7 wherein from 50 to 80 percent of the carboxylic acid groups are ionised.

9. The melt blend of any of Claims 1—8 wherein the oxymethylene polymer comprises an oxymethylene copolymer.

10. The melt blend of Claim 9 wherein the oxymethylene copolymer comprises 85 to 99.6 percent by weight of recurring $—OCH_2—$ groups interspersed with groups of the formula:

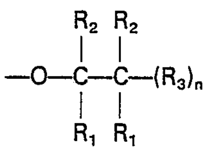

(A)

wherein each $R_1$ and $R_2$ is selected from hydrogen, lower alkyl and halogen-substituted lower alkyl radicals, each $R_3$ is selected from methylene, oxymethylene, lower alkyl and haloalkyl-substituted methylene, and lower alkyl and halo-alkyl-substituted oxymethylene radicals and n is 0, 1, 2 or 3, each lower alkyl radical having 1 or 2 carbon atoms, and said groups of the formula A being incorporated during the step of copolymerisation to produce the copolymer by the opening of a ring of a cyclic ether having adjacent carbon atoms by the breaking of an oxygen-to-carbon linkage.

11. The melt blend of Claim 10 wherein the cyclic ether is represented by the formula:

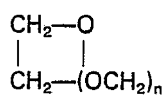

wherein n is 0, 1 or 2.

12. The melt blend of Claim 11 wherein the cyclic ether is ethylene oxide.

13. The melt blend of any of Claims 1—8 wherein the oxymethylene polymer comprises an oxymethylene homopolymer.

14. An article moulded from the melt blend of any of Claims 1—13.

15. An article injection moulded from the melt blend of any of Claims 1—13.

**Patentansprüche**

1. Schmelzgemisch, umfassend 2 bis 40 Gew.-% eines Oxymethylen-Polymers und 98 bis 60 Gew.-% eines ionischen Copolymers von alpha-Olefinen mit 2 bis 8 Kohlenstoff-Atomen und wenigstens einer alpha-beta-ethylenisch ungesättigten Carbonsäure mit 3 bis 8 Kohlenstoff-Atomen, wobei in dem Copolymer 10 bis 90% der Carbonsäure durch Neutralisation mit Metall-Ionen ionisiert sind.

2. Schmelzgemisch nach Anspruch 1, worin das alpha-Olefin Ethylen ist.

3. Schmelzgemisch nach Anspruch 1 oder 2, worin die Metall-Ionen aus Natrium, Kalium, Zink, Cadmium und Blei ausgewählt sind.

4. Schemelzgemisch nach irgendeinem der Ansprüche 1 bis 3, worin das ionische Copolymer ein Copolymer aus Ethylen und Methacrylsäure umfaßt, worin die Carboxyl-Gruppen zum Teil mit Zink neutralisiert sind.

5. Schmelzgemisch nach irgendeinem der Ansprüche 1 bis 4, worin das ionische Polymer wenigstens 50 Mol-% des alpha-Olefins umfaßt.

6. Schmelzgemisch nach Anspruch 5, worin das ionische Copolymer 80 bis 99 Mol-% des alpha-Olefins umfaßt.

7. Schmelzgemisch nach irgendeinem der Ansprüche 1 bis 6, worin das ionische Copolymer 0,2 bis 25 Mol-% der ungesättigten Carbonsäure umfaßt.

8. Schmelzgemisch nach irgendeinem der Ansprüche 1 bis 7, worin 50 bis 80% der Carbonsäure-Gruppen ionisiert sind.

9. Schmelzgemisch nach irgendeinem der Ansprüche 1 bis 8, worin das Oxymethylen-Polymer ein Oxymethylen-Copolymer umfaßt.

10. Schmelzgemisch nach Anspruch 9, worin das Oxymethylen-Copolymer 85 bis 99,6 Gew.-% wiederkehrender $—OCH_2—$ Gruppen umfaßt, zwischen denen Gruppen der Formel

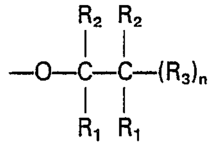

(A)

verteilt sind, in der jedes

$R_1$ und $R_2$ aus Wasserstoff, Niederalkyl-Resten und Halogen-substituierten Niederalkyl-Resten ausgewählt ist, jedes

$R_3$ aus Methylen-, Oxymethylen-, Niederalkyl- und Halogenoalkyl-substituierten Methylen- und Niederalkyl- und Halogenoalkyl-substituierten Oxymethyl-Resten ausgewählt ist und

n 0, 1, 2 oder 3 ist,

wobei jeder Niederalkyl-Rest 1 oder 2 Kohlenstoff-Atome hat und die Gruppe der Formel A während des Schrittes der Copolymerisation eingearbeitet wird, wodurch ein Copolymere durch Ringöffnung eines cyclischen Ethers mit benachbarten Kohlenstoff-Atomen durch Aufbrechen einer Sauerstoff-Kohlenstoff-Bindung erzeugt wird.

11. Schmelzgemisch nach Anspruch 10, worin der cyclische Ether durch die Formel

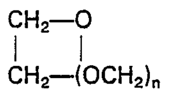

bezeichnet wird, in der n 0, 1 oder 2 ist.

12. Schmelzgemisch nach Anspruch 11, worin der cyclische Ether Ethylenoxid ist.

13. Schmelzgemisch nach irgendeinem der Ansprüche 1 bis 8, worin das Oxymethylen-Polymer ein Oxymethylen-Homopolymer umfaßt.

14. Gegenstand, formgepreßt aus einem Schmelzgemisch nach irgendeinem der Ansprüche 1 bis 13.

15. Gegenstand, durch Spritzguß geformt aus einem Schmelzgemisch nach irgendeinem der Ansprüche 1 bis 13.

**Revendications**

1. Mélange fondu comprenant de 2 à 40 pour cent en poids d'un polymère d'oxyméthylène et de 98 à 60 pour cent en poids d'un copolymère ionique d'alpha-oléfines ayant de 2 à 8 atomes de carbone et d'au moins un acide carboxylique alpha, beta-éthyléniquement insaturé ayant de 3 à 8 atomes de carbone, le copolymère ayant de 10 à 90 pour cent des groupes acide carboxylique ionisés par neutralisation avec des ions métalliques.

2. Mélange fondu selon la revendication 1, dans lequel ladite alpha-oléfine est l'éthylène.

3. Mélange fondu selon la revendication 1 ou 2, dans lequel les ions métalliques sont choisis parmi le sodium, le potassium, le zinc, le cadmium et le plomb.

4. Mélange fondu selon l'une des revendications 1 à 3, dans lequel le copolymère ionique comprend un copolymère de l'éthylène et de l'acide méthacrylique dans lequel les groupes carboxyliques sont partiellement neutralisés avec le zinc.

5. Mélange fondu selon l'une des revendications 1 à 4, dans lequel le polymère ionique comprend au moins 50 pour cent molaire de l'alpha-oléfine.

6. Mélange fondu selon la revendication 5, dans lequel le copolymère ionique comprend de 80 à 99 pour cent molaire de l'alpha-oléfine.

7. Mélange fondu selon l'une des revendications 1 à 6, dans lequel le copolymère ionique comprend de 0,2 à 25 pour cent molaire de l'acide carboxylique insaturé.

8. Mélange fondu selon l'une des revendications 1 à 7, dans lequel le 50 à 80 pour cent des groupes acide carboxylique sont ionisés.

9. Mélange fondu selon l'une des revendications 1 à 8, dans lequel le polymère d'oxyméthylène comprend un copolymère d'oxyméthylène.

10. Mélange fondu selon la revendication 9, dans lequel le copolymère d'oxyméthylène comprend de 85 à 99,6 pour cent en poids de groupes $—OCH_2—$ récurrents intercalés avec des groupes de formule:

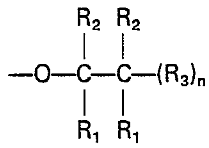

(A)

dans laquelle chacun des groupes $R_1$ et $R_2$ est chosi parmi l'hydrogène, les radicaux alkyles, inférieures et alkyles inférieures substitués par un halogène, chaque $R_3$ est choisi parmi les radicaux méthylène, oxyméthylène, méthylène substitué par un alkyle inférieure et méthylène substitué par un halogéno-alkyle, et les radicaux oxyméthylène substitué par un alkyle inférieure et oxyméthylène, substitué, par un halogéno alkyle et n est 0, 1, 3 ou 3, chaque radical alkyle inférieur ayant 1 ou 2 atomes de carbone, et lesdits groupes de formule A étant incorporés au cours de l'étape de copolymérisation pour produire le copolymère par l'ouverture d'un cycle d'un éther cyclique ayant des atomes de carbone adjacents par rupture d'une liaison oxygène-carbone.

11. Mélange fondu selon la revendication 10, dans lequel l'éther cyclique est représenté par la formule:

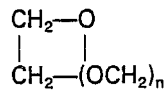

dans laquelle n est 0, 1 ou 2.

12. Mélange fondu selon la revendication 11, dans lequel l'éther cyclique est l'oxyde d'éthylène.

13. Mélange fondu selon l'une des revendications 1 à 8, dans lequel le polymère d'oxyméthylène comprend un homopolymère d'oxyméthylène.

14. Article moulé à partir du mélange fondu selon l'une des revendications 1 à 13.

15. Article moulé par injection à partir du mélange fondu selon l'une des revendications 1 à 13.

Fig. 1

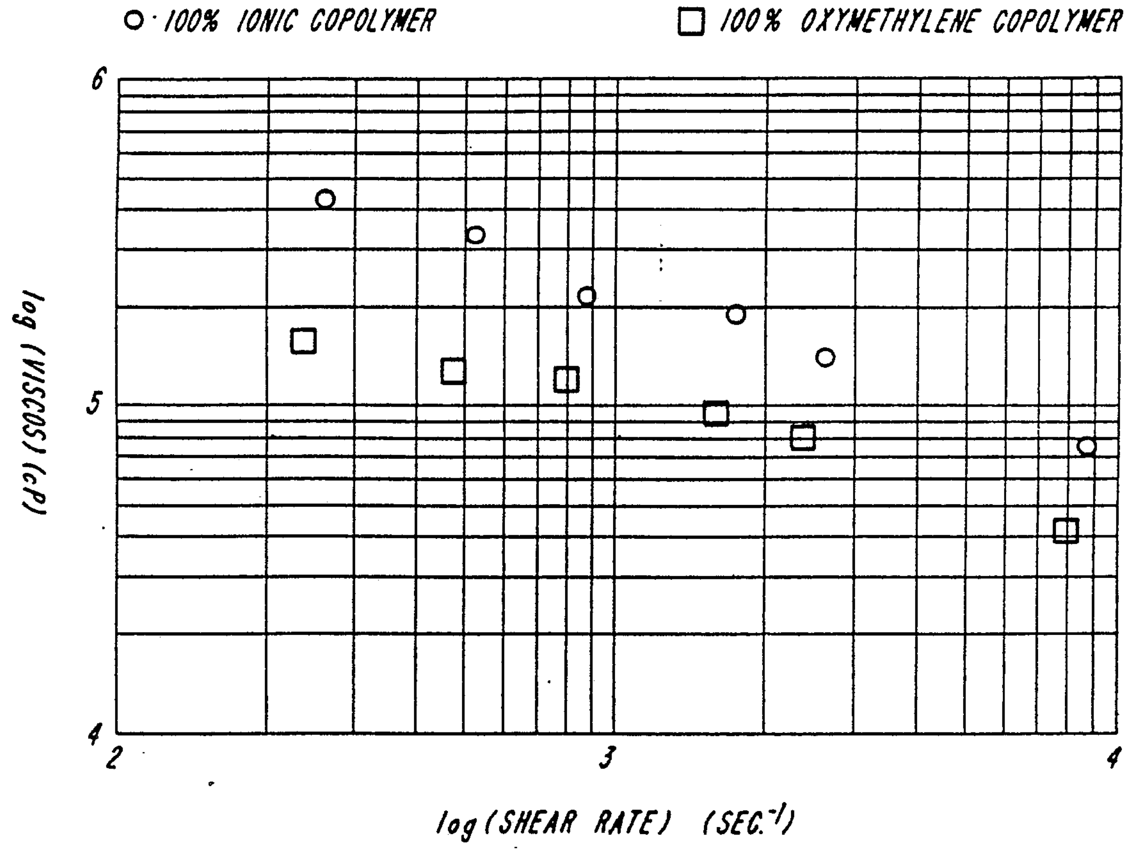
○ 100% IONIC COPOLYMER
□ 100% OXYMETHYLENE COPOLYMER
6
5
4
log (VISCOS) (cP)
2
3
4
log (SHEAR RATE) (SEC.$^{-1}$)

Fig. 2

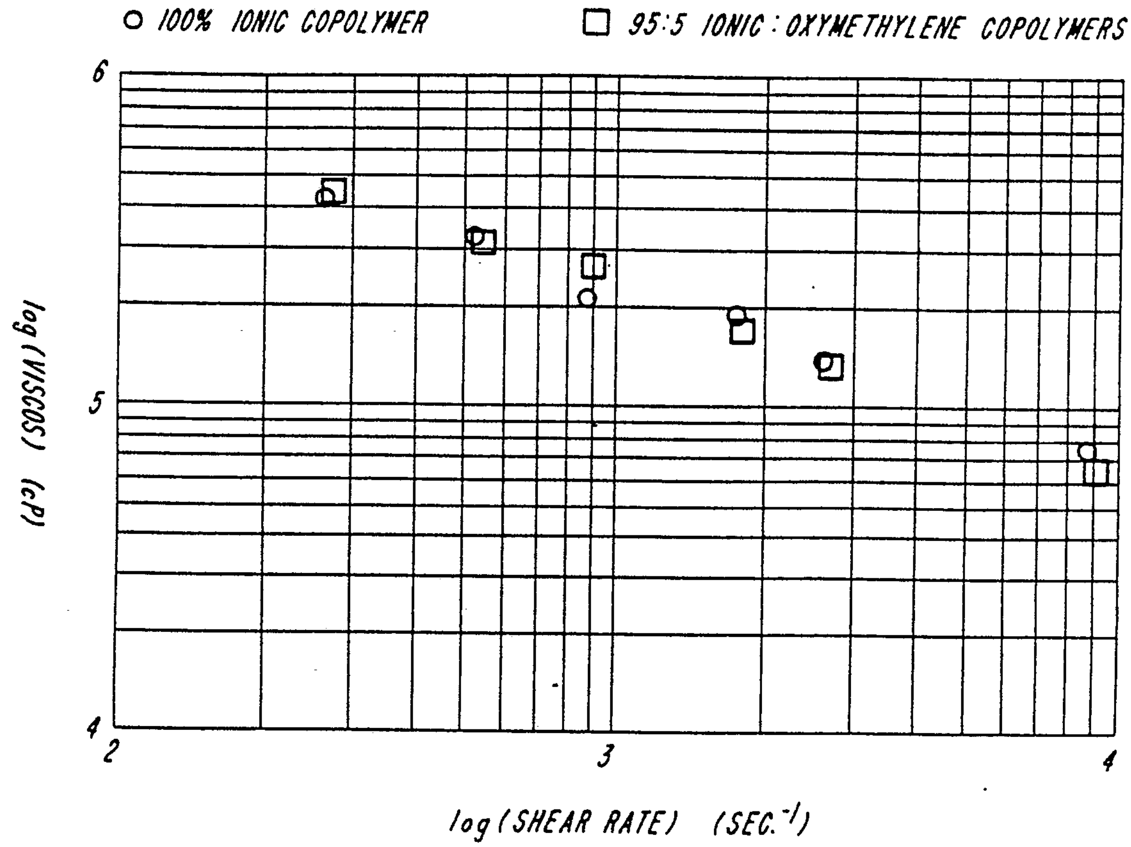
○ 100% IONIC COPOLYMER
□ 95:5 IONIC : OXYMETHYLENE COPOLYMERS
6
5
4
log (VISCOS) (cP)
2
3
4
log (SHEAR RATE) (SEC.$^{-1}$)

Fig. 3

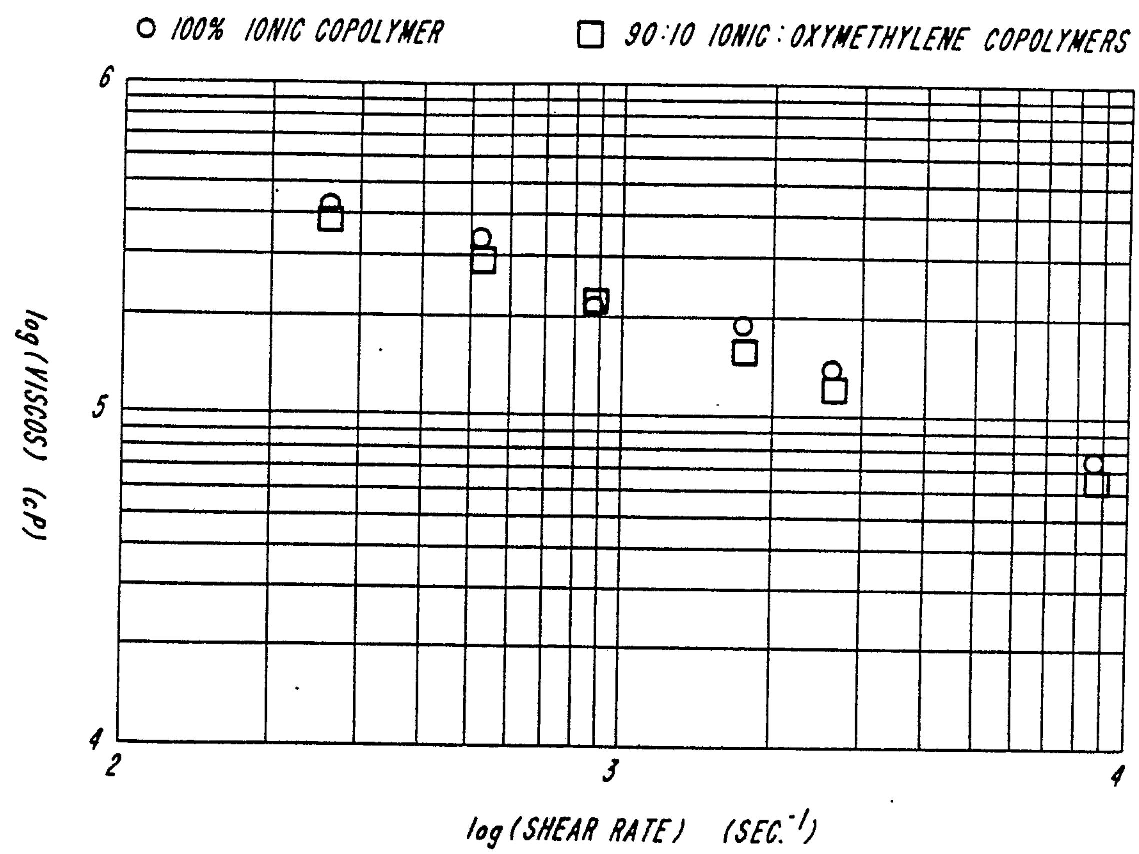
○ 100% IONIC COPOLYMER
□ 90:10 IONIC:OXYMETHYLENE COPOLYMERS
6
5
4
2
3
4
log (VISCOS) (cP)
log (SHEAR RATE) (SEC.$^{-1}$)

Fig. 4

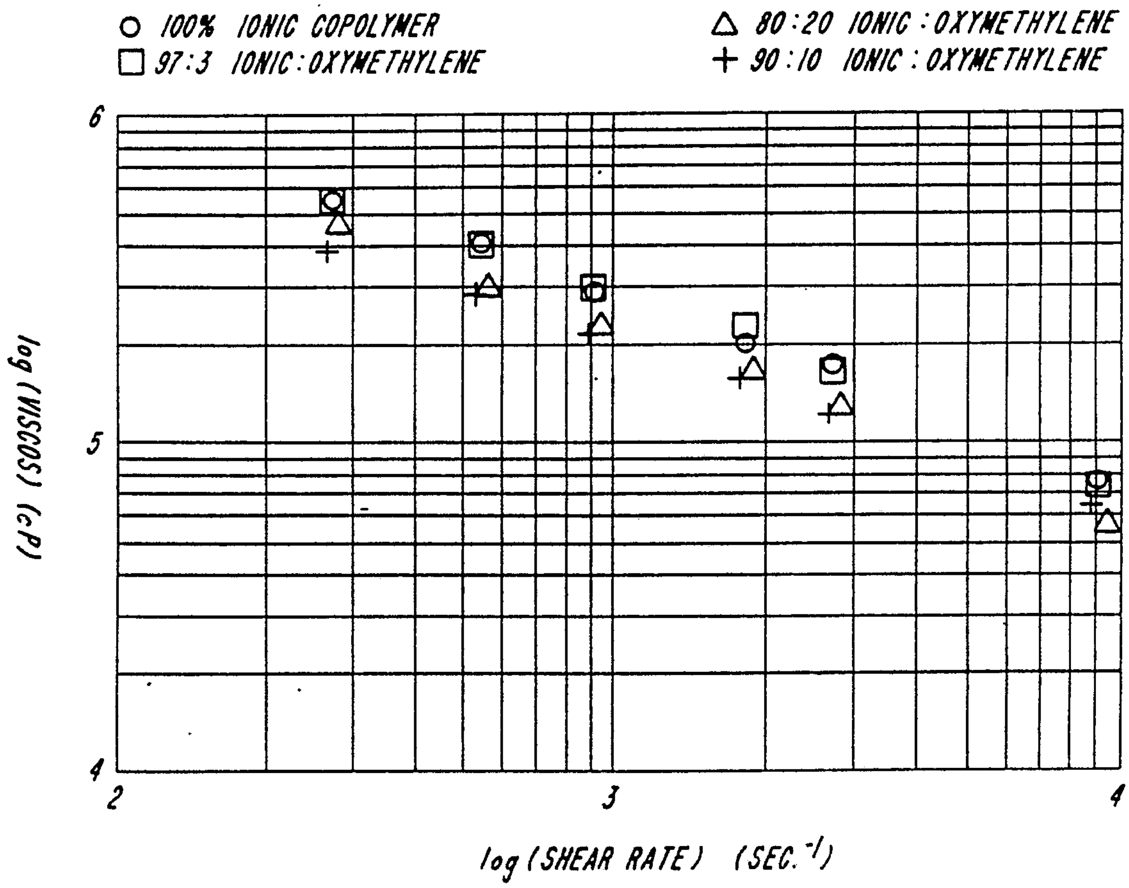
○ 100% IONIC COPOLYMER
□ 97:3 IONIC:OXYMETHYLENE
△ 80:20 IONIC:OXYMETHYLENE
+ 90:10 IONIC:OXYMETHYLENE
log (VISCOS) (cP)
6
5
4
2
3
4
log (SHEAR RATE) (SEC.⁻¹)

Fig. 5

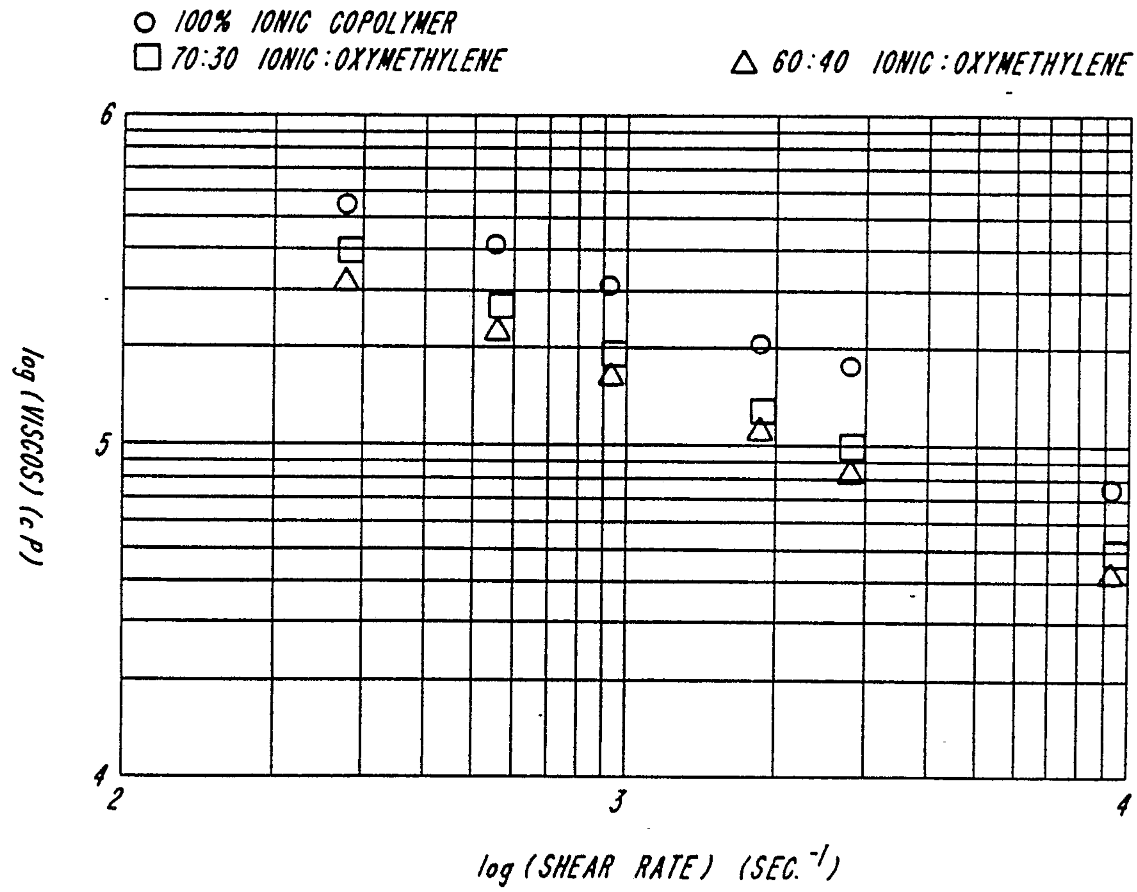

○ 100% IONIC COPOLYMER
□ 70:30 IONIC : OXYMETHYLENE
△ 60:40 IONIC : OXYMETHYLENE
6
5
4
log (VISCOS) (c.P)
2
3
4
log (SHEAR RATE) (SEC.$^{-1}$)